# EUROPEAN PATENT APPLICATION

(11) **EP 4 678 895 A1**
(43) Date of publication of application: **14.01.2026**
(21) Application number: 25189393.9
(22) Date of filing: 14.07.2025
(51) Int. Cl.: F02C 3/22, F02C 7/224, F02C 7/143

(54) **FUEL CELL EXHAUST CONDENSATION WITH TURBOMACHINERY WATER AUGMENTATION USING CRYOGENIC BOTTOMING CYCLE**

(30) Priority: 12.07.2024 US 202418770950
(71) Applicant: RTX Corporation, Farmington, CT 06032 (US)
(72) Inventor: EVANS, Brandon M., Farmington, 06032 (US); TERWILLIGER, Neil J., Farmington, 06032 (US)
(74) Representative: Dehns

(57) **Abstract**

An aircraft propulsion system (20) includes a bottoming cycle (60) where a working fluid is heated and expanded through a bottom turbine to generate shaft power. A first heat exchanger (44) provides thermal communication between a fuel cell exhaust flow and the working fluid of the bottoming cycle (60). The working fluid is cooled by a cryogenic fuel flow (56) in a fuel/working fluid heat exchanger (54).

## Description

### TECHNICAL FIELD

The invention relates generally to a bottom cycle for an aircraft propulsion system and more specifically to a bottoming cycle that utilizes a cryogenic fuel as a heat sink.

### BACKGROUND OF THE INVENTION

Gas turbine engines typically include a compressor where inlet air is compressed and delivered into a combustor. In the combustor, the compressed air is mixed with fuel and ignited to generate an exhaust gas flow. The exhaust flow is expanded through a turbine section to generate shaft power used to drive the compressor and a propulsive fan. Some energy in the high energy exhaust flow is recovered as it is expanded through a turbine section. However, a large amount of energy in the form of heat is simply exhausted from the turbine section to the atmosphere. A bottoming cycle utilizes recovered heat to generate additional useful work. A working fluid in the bottoming cycle is heated to drive a secondary turbine to generate additional shaft power. The working fluid in the bottoming cycle is then cooled, compressed, and reheated before expansion back through the turbine. The capability of the working fluid to accept heat limits energy recovery of the bottoming cycle.

### SUMMARY OF THE INVENTION

An aircraft propulsion system according to a first aspect of the invention includes a core engine that includes a main compressor where an inlet airflow is compressed and communicated to a combustor to generate an exhaust gas flow that is expanded through a main turbine section to generate shaft power used to drive the main compressor and a propulsive fan, a fuel cell that generates electric power from a flow of fuel and oxygen and emits a fuel cell exhaust flow that contains water, a bottoming cycle where a working fluid is heated and expanded through a bottom turbine to generate shaft power, a first heat exchanger that provides thermal communication between the fuel cell exhaust flow and the working fluid of the bottoming cycle, a cryogenic fuel system that includes a cryogenic fuel storage tank, a fuel flow path for routing a cryogenic fuel flow to the combustor of the core engine, and a fuel/working fluid heat exchanger for cooling the working fluid with the cryogenic fuel flow.

**In** a further embodiment of the foregoing, the aircraft propulsion system further includes an evaporator where water within the fuel cell exhaust flow is transformed into a steam flow for injection into the combustor of the core engine.

**In** a further embodiment of any of the foregoing, the aircraft propulsion system further includes an intercooler system for cooling a core gas flow in the main compressor. A portion of water from the fuel cell exhaust flow is communicated to the intercooling system.

**In** a further embodiment of any of the foregoing, the aircraft propulsion system further includes a second heat exchanger where the cryogenic fuel flow is heated by the exhaust gas flow from the core engine prior to being injected into the combustor.

**In** a further embodiment of any of the foregoing aircraft propulsion systems, a portion of the cryogenic fuel heated in the second heat exchanger is communicated to the fuel cell.

**In** a further embodiment of any of the foregoing aircraft propulsion systems, the bottoming cycle further includes a bottoming compressor for pressurizing the working fluid prior to expansion through the bottoming turbine.

**In** a further embodiment of any of the foregoing aircraft propulsion systems, the bottoming cycle further includes a recuperation heat exchanger where a pressurized portion of the working fluid from the bottoming compressor is heated by an expanded portion of the working fluid from the bottoming turbine.

In a further embodiment of any of the foregoing aircraft propulsion systems, the recuperation heat exchanger is disposed upstream of the first heat exchanger such that heat from the recuperation heat exchanger is communicated to the working fluid before heat from the first heat exchanger.

In a further embodiment of any of the foregoing, the aircraft propulsion system further includes an output shaft that is driven by the bottoming turbine for driving an accessory component.

In a further embodiment of any of the foregoing aircraft propulsion systems, the accessory component includes a generator and the core engine further includes an electric motor that is coupled to the generator to supplement power that is provided by the main turbine to drive an engine shaft.

A gas turbine engine assembly according to another aspect of the invention includes a core engine that includes a main compressor where an inlet airflow is compressed and communicated to a combustor to generate an exhaust gas flow that is expanded through a main turbine section to generate shaft power used to drive the main compressor, a fuel cell that generates electric power from a flow of fuel and oxygen and emits a fuel cell exhaust flow that contains water, a bottoming cycle where a working fluid is heated and expanded through a bottom turbine to generate shaft power, a first heat exchanger that provides thermal communication between the fuel cell exhaust flow and the working fluid of the bottoming cycle, a cryogenic fuel system that includes a cryogenic fuel storage tank, a fuel flow path for routing a cryogenic fuel flow to the combustor of the core engine, a fuel/working fluid heat exchanger for cooling the working fluid with the cryogenic fuel flow, and an evaporator where water within the fuel cell exhaust flow is transformed into a steam flow for injection into the combustor of the core engine.

In a further embodiment of the foregoing, the gas turbine engine assembly further includes an intercooler system for cooling a core gas flow in the main compressor. A portion of water from the fuel cell exhaust flow is communicated to the intercooling system.

In a further embodiment of any of the foregoing, the gas turbine engine assembly further includes a second heat exchanger where the cryogenic fuel flow is heated by the exhaust gas flow from the core engine prior to being injected into the combustor. A portion of the cryogenic fuel is heated in the second heat exchanger is communicated to the fuel cell.

In a further embodiment of any of the foregoing gas turbine engine assemblies, the bottoming cycle further includes a bottoming compressor for pressurizing the working fluid prior to expansion through the bottoming turbine and a recuperation heat exchanger where a pressurized portion of the working fluid from the bottoming compressor is heated by an expanded portion of the working fluid from the bottoming turbine.

In a further embodiment of any of the foregoing gas turbine engine assemblies, the recuperation heat exchanger is disposed upstream of the first heat exchanger such that heat from the recuperation heat exchanger is communicated to the working fluid before heat from the first heat exchanger.

In a further embodiment of any of the foregoing, the gas turbine engine assembly further includes an output shaft that is driven by the bottoming turbine for driving an accessory component.

In a further embodiment of any of the foregoing gas turbine engine assemblies, the accessory component includes a generator and the core engine further includes an electric motor that is coupled to the generator to supplement power that is provided by the main turbine to drive an engine shaft.

A method of operating an aircraft propulsion system according to another aspect of the invention includes generating an exhaust gas flow in a combustor of a core engine by igniting a mixture of compressed air and a cryogenic fuel, generating electric power in a fuel cell from a flow of the cryogenic fuel and oxygen and emitting a fuel cell exhaust that contains water, communicating thermal energy from the fuel cell exhaust into a working fluid within a bottoming cycle where a working fluid is heated and expanded through a bottom turbine to generate shaft power, cooling the working fluid that is exhausted from the bottoming turbine in a fuel/working fluid heat exchanger where a cryogenic fuel accepts heat from the working fluid, and heating a portion of water that is contained in the fuel cell exhaust to generate a steam flow for injection into the combustor.

In a further embodiment of the foregoing, the method further includes heating the cryogenic fuel flow with a portion of the exhaust gas flow that is generated by the combustor and communicates the heated cryogenic fuel flow to the combustor and to the fuel cell.

In a further embodiment of any of the foregoing, the method further includes communicating a portion of water that is contained in the fuel cell exhaust for cooling a core flow through a compressor section of the core engine.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

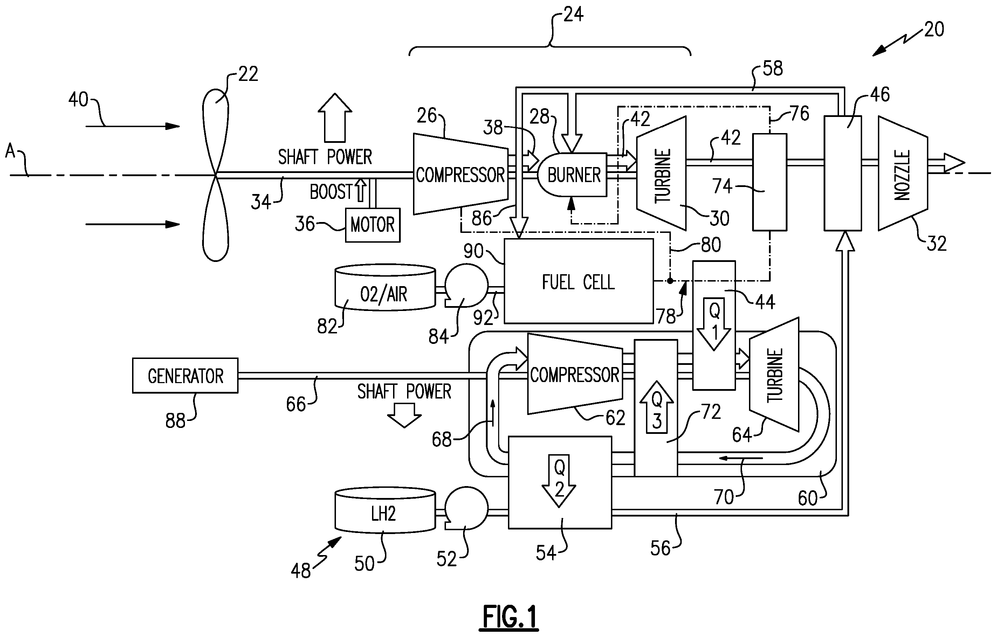

Figure 1 is a schematic view of an example aircraft propulsion system including an adaptable waste heat bottoming cycle.

### DETAILED DESCRIPTION

Figure 1 schematically illustrates an aircraft propulsion system 20 that includes a bottoming cycle with a working fluid heated by a fuel cell exhaust flow. Additionally, water within the fuel cell exhaust flow is utilized within a core engine 24 to improve engine efficiency.

The example propulsion system 20 includes a core engine 24 and a fuel cell 90. Both the core engine 24 and the fuel cell 90 utilize a cryogenic fuel flow to produce power. The core engine 24 generates shaft power that is utilized to drive a propulsive fan 22. The fuel cell 90 produces electric power that may be utilized in the aircraft or in the core engine 24 to supplement power generated from the expansion of an exhaust gas flow 42.

The example core engine 24 includes a compressor section 26, a combustor section 28 and the turbine section 30 disposed along the longitudinal axis A. The fan 22 drives an inlet airflow 40 into the compressor section 26. The inlet flow 40 is compressed and communicated as pressurized core flow 38 to the combustor 28 where the compressed core flow 38 is mixed with a fuel flow 58 and ignited to generate the exhaust gas flow 42. The exhaust gas flow 42 expands through the turbine section 30 where energy is extracted and utilized to generate shaft power to drive an engine shaft 34. The engine shaft 34 drives the compressor section 26 and the fan 22. The exhaust gas flow 42 is subsequently exhausted through a nozzle 32.

A cryogenic fuel system 48 includes at least a fuel tank 50 and a fuel pump 52 to provide a liquid fuel flow 56 through a fuel passage to the combustor 28. The example fuel system 48 is configured to provide a hydrogen based fuel such as a liquid hydrogen (LH₂). Although hydrogen is disclosed by way of example, other cryogenic, non-carbon based fuels could be utilized and are within the contemplation of this disclosure.

An exhaust heat exchanger 46 is disposed downstream of a fuel/working fluid heat exchanger 54 and provides further heating and transformation into the vaporized fuel flow 58. The vaporized fuel flow 58 is injected into the combustor 28 to generate the exhaust gas flow 42.

The tank 50 includes features for storing a cryogenic fuel at temperatures required to maintain the fuel in a liquid phase. Temperatures required to maintain the cryogenic fuel in a liquid phase may be as low as about -412 °F (-247 °C). In one example embodiment, the cryogenic fuel is maintained at a temperature below 0 °F (-18 °C). In another example embodiment, the fuel is maintained in the tank 50 at temperatures below -100 °F (-73 °C). The cryogenic fuel may be maintained at temperatures below about -150 °F (-101 °C) and as low as about -435 °F (-259 °C).

The low temperatures of the cryogenic fuel 56 provide a source of heat absorption that is utilized in a bottoming cycle 60. The bottoming cycle 60 provides for recovering thermal energy otherwise lost as exhaust through the nozzle 32.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

The fuel cell 90 generates electric power from a fuel flow 86 and a flow of oxygen 92 from an oxygen source 82. An oxygen pump 84 provides for a pressurized flow of oxygen 92. The output of the fuel cell 90 is a fuel cell exhaust 78 that contains water. Water in the fuel cell exhaust 78 is utilized in the core engine 24 for various uses. In one disclosed example embodiment, a portion of the water containing fuel cell exhaust 78 is cooled in a first heat exchanger 44. The first heat exchanger 44 is in thermal communication with the bottoming cycle 60.

The example bottoming cycle 60 includes a bottoming compressor 62 that provides a compressed working fluid flow to a bottoming turbine 64. The compressed working fluid flow is heated by the fuel cell exhaust 78 in the first heat exchanger 44. The working fluid flow may also be heated by a recuperative heat exchanger 72. In the recuperative heat exchanger 72, thermal energy from a hot working fluid flow 70 is input into a relatively cooler working fluid flow 68 exhausted from the bottoming compressor 62. Accordingly, heat within the bottoming cycle 60 is recovered and conserved.

The heated working fluid flow is expanded through the turbine 64 to generate shaft power to drive an output shaft 66. The bottoming output shaft 66 may be utilized to drive an accessory component such as a generator 88. Working fluid flow exhausted from the bottoming turbine 64 is cooled in a fuel/ working fluid heat exchanger 54 that utilizes the cryogenic fuel flow 56 as a heat sink. The cooled working fluid flow 68 is communicated back to the bottoming compressor 62 to repeat the cycle.

The disclosed example bottoming cycle 60 uses heat generated from the fuel cell exhaust 78 to heat the working fluid flow in the bottoming cycle 60. The fuel cell exhaust 78 contains a substantial amount of water that is utilized for various purposes in the core engine 24.

In one example, the fuel cell exhaust 78 is communicated through the first heat exchanger 44 to heat the working fluid flow of the bottoming cycle 60. The now cooled fuel cell exhaust 78 containing water is communicated through an evaporator 74.

In the evaporator 74, heat from the exhaust gas flow 42 is utilized to vaporize the water and generate a steam flow 76 that may be injected into the combustor 28. Injection of steam into the combustor 28 provides for increased efficiency in operation of the core engine 24. The increased efficiency is a result of an increase in mass flow provided by the steam flow 76 through the turbine section 30 without a corresponding increase in work required by the compressor 26. Accordingly, heat and water from the fuel cell exhaust 78 is recovered and utilized to improve efficiency.

A second portion of the fuel cell exhaust 78 may be communicated as an intercooling flow 80 to the compressor section 26 of the core engine 24. Intercooling of a core flow 38 within the compressor section 26 provides an increase in compressor efficiency by cooling the core flow. Accordingly, rather than simply exhausting the fuel cell exhaust 78 through the nozzle 32, waste heat is recovered by the first heat exchanger 44 and water within the fuel cell exhaust 78 is utilized at various locations within the core engine 24.

Power generated by the bottoming turbine 64 is utilized to drive a generator 88 through the bottoming shaft 66. The generator 88 produces electric power that may be used in addition to the electric power generated by the fuel cell 90 by other engine and aircraft systems. **In** one example embodiment, the electric motor 36 coupled to the engine shaft 34 may be operated to input power to the engine shaft 34 to supplement power provided by the turbine 30. Although an example use of power from the bottoming cycle 60 is disclosed, other uses of the power recovered by operation of the bottoming turbine 64 are within the contemplation and scope of this disclosure.

Although steam injection and intercooling are disclosed by way of example as uses for water contained within the fuel cell exhaust 78, other uses for water within the fuel cell exhaust may be utilized and are within the contemplation and scope of this disclosure.

Accordingly, the example propulsion system 20 operates at increased efficiencies by recovering waste heat and water from the fuel cell exhaust.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. An aircraft propulsion system (20) comprising:
a core engine (24) comprising a main compressor (26), a combustor (28), and a main turbine section (30), the core engine configured such that an inlet airflow (40) is compressed in the main compressor (26) and communicated to the combustor (28) to generate an exhaust gas flow (42) that is expanded through the main turbine section (30) to generate shaft power used to drive the main compressor (26) and a propulsive fan (22);
a fuel cell (90) configured to generate electric power from a flow of fuel (86) and oxygen (92) and emit a fuel cell exhaust flow (78) containing water;
a bottoming cycle system (60) in which a working fluid is heated and expanded through a bottom turbine to generate shaft power;
a first heat exchanger (44) configured to provide thermal communication between the fuel cell exhaust flow (78) and the working fluid of the bottoming cycle (60);
a cryogenic fuel system (48) comprising a cryogenic fuel storage tank (50) and a fuel flow path for routing a cryogenic fuel flow (56) to the combustor (28) of the core engine (24); and
a fuel/working fluid heat exchanger (54) configured to cool the working fluid with the cryogenic fuel flow (56).

2. The aircraft propulsion system (20) of claim **1,** further comprising an evaporator (74) in which water within the fuel cell exhaust flow (78) is transformed into a steam flow (76) for injection into the combustor (28) of the core engine (24).

3. The aircraft propulsion system (20) of claim 1 or 2, further comprising an intercooling system configured to cool a core gas flow in the main compressor (26), wherein a portion of water from the fuel cell exhaust flow (78) is communicated to the intercooling system.

4. The aircraft propulsion system (20) of any preceding claim, further comprising a second heat exchanger (46) in which the cryogenic fuel flow (56) is heated by the exhaust gas flow (42) from the core engine (24) prior to being injected into the combustor (28).

5. The aircraft propulsion system (20) of claim 4, wherein a portion of the cryogenic fuel (56) heated in the second heat exchanger (46) is communicated to the fuel cell (90).

6. The aircraft propulsion system (20) of any preceding claim, wherein the bottoming cycle system (60) further comprises a bottoming compressor (62) configured to pressurize the working fluid prior to expansion through the bottoming turbine (64).

7. The aircraft propulsion system (20) of claim 6, wherein the bottoming cycle system (60) further comprises a recuperation heat exchanger (72) in which a pressurized portion of the working fluid from the bottoming compressor (62) is heated by an expanded portion of the working fluid from the bottoming turbine (64).

8. The aircraft propulsion system (20) of claim 7, wherein the recuperation heat exchanger (72) is disposed upstream of the first heat exchanger (44) such that heat from the recuperation heat exchanger (72) is communicated to the working fluid before heat from the first heat exchanger (44).

9. The aircraft propulsion system (20) of any preceding claim, further comprising an accessory component and an output shaft (66), the output shaft (66) driven by the bottoming turbine and configured to drive the accessory component.

10. The aircraft propulsion system (20) of claim 9, wherein the accessory component comprises a generator (88) and the core engine (24) further comprises an electric motor (36) coupled to the generator (88) to supplement power provided by the main turbine section to drive an engine shaft (34).

11. A gas turbine engine assembly comprising:
a core engine (24) comprising a main compressor (26), a combustor (28), and a main turbine section (30), the core engine configured such that an inlet airflow (40) is compressed and communicated to a combustor (28) to generate an exhaust gas flow (42) that is expanded through a main turbine section (30) to generate shaft power used to drive the main compressor (26);
a fuel cell (90) configured to generate electric power from a flow of fuel (86) and oxygen (92) and emit a fuel cell exhaust flow (78) containing water;
a bottoming cycle system (60) in which a working fluid is heated and expanded through a bottom turbine to generate shaft power;
a first heat exchanger (44) configured to provide thermal communication between the fuel cell exhaust flow (78) and the working fluid of the bottoming cycle system (60);
a cryogenic fuel system (48) comprising a cryogenic fuel storage tank (50) and a fuel flow path for routing a cryogenic fuel flow (56) to the combustor (28) of the core engine (24);
a fuel/working fluid heat exchanger (54) configured to cool the working fluid with the cryogenic fuel flow (56); and
an evaporator (74) in which water within the fuel cell exhaust flow is transformed into a steam flow (76) for injection into the combustor (28) of the core engine (24).

12. The gas turbine engine assembly of claim 11, wherein:
the gas turbine engine assembly further comprises an intercooler system configured to cool a core gas flow in the main compressor (26), wherein a portion of water from the fuel cell exhaust flow (78) is communicated to the intercooling system;
the gas turbine engine assembly further comprises a second heat exchanger (46) in which the cryogenic fuel flow (56) is heated by the exhaust gas flow (42) from the core engine (24) prior to being injected into the combustor (28), wherein a portion of the cryogenic fuel (56) heated in the second heat exchanger (46) is communicated to the fuel cell (90);
the bottoming cycle (60) further comprises a bottoming compressor (62) configured to pressurize the working fluid prior to expansion through the bottoming turbine and a recuperation heat exchanger (72) in which a pressurized portion of the working fluid from the bottoming compressor (62) is heated by an expanded portion of the working fluid from the bottoming turbine (64), and optionally the recuperation heat exchanger is disposed upstream of the first heat exchanger (44) such that heat from the recuperation heat exchanger (72) is communicated to the working fluid before heat from the first heat exchanger (44); and/or
the gas turbine engine assembly further comprises an accessory component and an output shaft (66), the output shaft (66) driven by the bottoming turbine and configured to drive the accessory component, and optionally the accessory component comprises a generator (88) and the core engine (24) further comprises an electric motor (36) coupled to the generator (88) to supplement power provided by the main turbine section to drive an engine shaft (34).

13. A method of operating an aircraft propulsion system (20) comprising:
generating an exhaust gas flow (42) in a combustor (28) of a core engine (24) by igniting a mixture of compressed air and a cryogenic fuel (56);
generating electric power in a fuel cell (90) from a flow of the cryogenic fuel (56) and oxygen (92) and emitting a fuel cell exhaust (78) containing water;
communicating thermal energy from the fuel cell exhaust (78) into a working fluid within a bottoming cycle (60) where a working fluid is heated and expanded through a bottom turbine to generate shaft power;
cooling the working fluid exhausted from the bottoming turbine in a fuel/working fluid heat exchanger (54) where a cryogenic fuel (56) accepts heat from the working fluid; and
heating a portion of water contained in the fuel cell exhaust to generate a steam flow (76) for injection into the combustor (28).

14. The method of claim 13, further comprising heating the cryogenic fuel flow (56) with a portion of the exhaust gas flow (42) generated by the combustor (28) and communicating the heated cryogenic fuel flow (56) to the combustor (28) and to the fuel cell (90).

15. The method of claim 13 or 14, further comprising communicating a portion of water contained in the fuel cell exhaust for cooling a core flow (38) through a compressor section (26) of the core engine (24).
